# EUROPÄISCHE PATENTSCHRIFT

(11) **EP 3 289 578 B1**
(45) Veröffentlichungstag und Bekanntmachung des Hinweises auf die Patenterteilung: **13.03.2019**
(21) Anmeldenummer: 16716842.6
(22) Anmeldetag: 06.04.2016
(51) Int. Cl.: G08G 1/16, B60W 30/095, B60W 40/04, G01S 17/89, G01S 13/93, G06K 9/00, G01S 7/48, G06K 9/46

(54) **ANALYSE DER BELEGUNG VON GRID-BASIERTEN UMFELDKARTEN EINES FAHRZEUGS**
ANALYSIS OF THE ASSIGNMENT OF GRID-BASED ENVIRONMENT MAPS OF A VEHICLE
ANALYSE DE L'OCCUPATION DE CARTES ENVIRONNEMENTALES D'UN VÉHICULE À PARTIR DE GRILLES

(30) Priorität: 30.04.2015 DE 102015207978
(43) Veröffentlichungstag der Anmeldung: 07.03.2018
(73) Patentinhaber: Bayerische Motoren Werke Aktiengesellschaft, 80809 München (DE)
(72) Erfinder: KORMANN, Oliver, 74360 Ilsfeld (DE)
(86) Internationale Anmeldenummer: PCT/EP2016/057530
(87) Internationale Veröffentlichungsnummer: WO 2016/173813

(56) Entgegenhaltungen:
- EP-A1- 1 672 390
- DE-A1-102012 214 307
- US-A1- 2010 063 730

## Beschreibung

Die Erfindung betrifft ein Verfahren zur Errechnung einer Belegungsrepräsentation der Nachbarzellen einer Zelle einer Umfeldkarte sowie eine entsprechende elektronische Recheneinrichtung.

Für viele zukünftige Fahrfunktionen und Fahrerassistenzsysteme eines Fahrzeugs, insbesondere das automatisierte Fahren, Einparkassistent, etc, ist die Erfassung des Umfeldes des Fahrzeugs unerlässlich. Insbesondere muss meist festgestellt werden, welche Teilbereiche des Umfeldes nicht durch Hindernisse blockiert sind und damit uneingeschränkt befahrbar sind. Die Umfelderfassung wird dabei mit verschiedenen Sensorsystemen wie Kameraverbünde, Radar, Lidar und Ultraschallsensoren, ausgeführt. Zur Modellierung des Umfelds eines Fahrzeugs für verschiedene Kamera- bzw. generell sensorbasierte Fahrerassistenzsysteme (z.B. Einparkassistent), wird typischerweise eine Umfeldkarte, häufig auch als Grid bezeichnet, als Modell verwendet.

Eine Umfeldkarte ist eine Datenstruktur und umfasst Umfelddaten, die aus der Verarbeitung von Sensormessungen des Umfeldes resultieren und diese repräsentieren. Die Umfelddaten werden dabei meist nach Abschnitten des Umfeldes geordnet. Jedem Abschnitt werden diejenigen Umfelddaten zugeordnet, die aus Messungen in diesem Teilbereich resultieren. Die einem Abschnitt zugeordneten Umfelddaten werden typischerweise in einer Untereinheit der Umfeldkarte, einer Zellen, gespeichert. Dabei ist jedem Abschnitt eine Zelle zugewiesen. Die Umfelddaten können unterschiedliche Informationstypen je Zelle umfassen, beispielsweise die Belegungswahrscheinlichkeit des jeweiligen Abschnitts (also die Wahrscheinlichkeit, dass der Abschnitt von einem Hindernis belegt ist), die Höhe des Hindernisses, der Explorationsgrad der Zelle, etc. Ein Hindernis in einem Abschnitt bedeutet, dass der Abschnitt des Umfeldes nicht oder nur unter Bedingungen mit dem Fahrzeug befahren werden kann. Insgesamt umfassen Umfeldkarten somit typischerweise mehrere Ebenen mit jeweils unterschiedlichen Informationstypen.

Die Abschnitte des Umfeldes können gemäß verschiedenen geometrischen Anordnungen aufgeteilt sein. Typischerweise sind die Abschnitte in einer regelmäßigen Gitterstruktur aufgeteilt mit Zeilen und Spalten (im Sinne einer Aufteilung nach kartesischen Koordinaten), die Abschnitte können allerdings auch einer radialen Aufteilung nach Entfernung vom Ursprung und Winkelbereich folgen (im Sinne einer Aufteilung nach Polarkoordinaten).

Die Umfeldkarte wird in typischen echtzeitfähigen Implementierungen in embedded systemen für Fahrzeuge in einem linear angeordneten Speicher (Bitmap) abgelegt. Dabei wird jeder Zelle einer Umfeldkarte ein (statischer) Speicherbereich zugewiesen.

Zur Identifikation und Definition von Kanten, die sich über mehrere Abschnitte (und damit Zellen) der Umfeldkarte erstrecken, ist es hilfreich die direkte Nachbarschaft einer Zelle zu analysieren und zu kompakt zu repräsentieren. Mithilfe dieser Repräsentation und der Repräsentationen weiterer Zellen können Kanten leichter und recheneffizienter bestimmt werden.

Im Allgemeinen kann die Nachbarschaft von Grid-Zellen typischerweise auf zwei Arten analysiert werden.
1. Effiziente Separierung von Spalten und Zeilen zur globalen Faltung mit entsprechenden separierten Kerneln, sofern die Nachbarschaft sämtlicher Grid-Zellen relevant ist; oder
2. Die etwas ineffizientere lokale Faltung mit einem entsprechenden Kernel, sofern nur einzelne Grid-Zellen von Relevanz sind.

Die bei der lokalen Faltung zum Einsatz kommende Cluster-Analyse sieht vor, die belegten Zellen in der Nachbarschaft einer Zelle zu zählen, oder für besondere Anwendungen die belegten benachbarten Zellen eindeutig aufzuzählen. Ob eine Zelle belegt ist, wird dabei mittels eines Schwellwerts entschieden, wozu typischerweise Verzweigungen nötig werden.

Gerade im Bereich der Umfeld-Repräsentation im Automotive Bereich sind Grids bzw. Umfeldkarten normalerweise dünn besetzt. Dadurch ist es effizienter, nur die Nachbarschaft bekannt belegter Zellen per Random Access mit einer lokalen Faltung zu analysieren. Die für die Cluster-Analyse benötigten Verzweigungen sind allerdings typischerweise auf Embedded Prozessoren nicht effizient implementiert, weshalb die Cluster-Analyse nur mit erheblichem Laufzeitaufwand zu bewältigen ist. Dies schränkt den Einsatz für Echtzeitanwendungen, wie die Fahrtsteuerung eines Fahrzeugs und die entsprechende Verarbeitung der Umfeldkarte, ein.

Der vorliegenden Erfindung liegt deshalb die Aufgabe zugrunde, ein für typische Embedded Prozessoren recheneffizientes Verfahren zur Analyse und Repräsentation der Nachbarzellen einer betrachteten Zelle einer Umfeldkarte bereitzustellen.

Die Druckschrift DE 10 2012 214 307 A1 offenbart ein Verfahren zum Modellieren eines Umfeldes eines Objekts umfassend die Schritte: Bereitstellen von zumindest einer Zelle mit einer eindeutigen Identifikation, Nachbarschaftsbeziehungen, die für jede Richtung, in der sich weitere Zellen befinden können, eine Identifikation einer vorhandenen Nachbarzelle oder eine Information, dass in dieser Richtung keine Nachbarzelle vorhanden ist umfasst, und Belegungsinformationen, die durch eine räumliche Diskretisierung der Zelle gebildet werden, wobei an jeder diskreten Stelle ein diskreter Belegungswert oder eine Belegungswahrscheinlichkeit angegeben ist, Bestimmen einer diskreten Objektposition in der zumindest einen Zelle, welche die aktuelle Position des Objekts repräsentiert, Erkennen eines Hindernisses in der Umgebung des Objekts und Bestimmung der Position des Hindernisses, Bestimmen von zumindest einer diskreten Hindernisposition in einer der bereitgestellten Zellen, die zu der Position des Hindernisses korrespondiert, Ändern des Belegungswertes oder der Belegungswahrscheinlichkeit der zumindest einen diskreten Hindernisposition derart, dass die Präsenz des Hindernisses angezeigt wird, und Ändern von zumindest einer diskreten Zwischenposition in mindestens einer der bereitgestellten Zellen zwischen diskreter Hindernisposition und diskreter Objektposition derart, dass diese eine freie Umgebung anzeigen, falls zumindest eine solche diskrete Zwischenposition vorhanden ist.

Die Aufgabe wird durch das Verfahren und die elektronische Recheneinrichtung gemäß den unabhängigen Ansprüchen gelöst. Vorteilhafte Weiterbildungen sind in den abhängigen Ansprüchen definiert.

Ein erster Aspekt der Erfindung betrifft ein Verfahren zur Errechnung einer Belegungsrepräsentation der Nachbarzellen einer Zelle einer Umfeldkarte; wobei die Umfeldkarte eine Datenstruktur ist, die als Untereinheiten Zellen umfasst; wobei die Zellen jeweils einem Abschnitt des Umfeldes eines Fahrzeugs zugeordnet sind; wobei das Fahrzeug mithilfe von Sensoren die Belegung der Abschnitte des Umfeldes durch Hindernisse erfasst und die Information zur Belegung eines Abschnitts in der entsprechenden zugeordneten Zelle speichert; Wobei die Belegungsrepräsentation eine Folge an binären Speichereinheiten ist, Binärsequenz; wobei jeder Stelle der Binärsequenz eine Nachbarzelle zugewiesen ist; wobei eine binäre Speichereinheit dazu ausgelegt ist zwei Zustände, aktiviert und inaktiviert, einzunehmen; Wobei jeder Nachbarzelle eine Folge an binären Speichereinheiten, Binärmuster (typischerweise Bitmasken), zugewiesen ist; wobei die Binärmuster derart gewählt werden, dass sich je zwei Binärmuster in zumindest einem Zustand an derselben Stelle der jeweiligen Folge unterscheiden; Wobei eine Selektionsliste bereitgestellt wird, die zwei Einträge umfasst, wobei jeder Eintrag eine Folge an binären Speichereinheiten umfasst; wobei die Speichereinheiten des ersten Eintrags alle den ersten Zustand aufweisen und die Speichereinheiten des zweiten Eintrags alle den zweiten Zustand aufweisen; wobei das Verfahren umfasst: Bereitstellen einer vorläufigen Belegungsrepräsentation, die auf einen vorgegebenen Startwert gesetzt ist; Für jede Nachbarzelle Ausführen der folgenden Unterverfahrensschritte: Bestimmen, ob die Belegung der Nachbarzelle einem vorbestimmten Kriterium genügt; Auswählen eines Eintrags aus einer Liste abhängig von der Erfüllung des Kriteriums; Verknüpfen des ausgewählten Eintrags und des der Nachbarzelle zugewiesenen Binärmusters, um ein Zwischenergebnis zu erhalten; Verknüpfen des Zwischenergebnisses mit der vorläufigen Belegungsrepräsentation; Falls die Unterverfahrensschritte für alle Nachbarzellen ausgeführt wurden: Bereitstellen der vorläufigen Belegungsrepräsentation als Belegungsrepräsentation. Die binäre Speichereinheit kann auch als "Bit" verstanden werden, wobei die binäre Speichereinheit auch mehrere Bits umfassen kann, die alle denselben Zustand aufweisen, entweder "0" oder "1". Die Nachbarzellen einer Zelle, sind alle Zellen, die eine Kante oder Ecke mit der betrachteten Zellen gemeinsam haben. In einem rechtwinkligen Raster hat eine Zelle somit acht Nachbarzellen. Typischerweise ist das Kriterium, ob die Belegungswahrscheinlichkeit größer 50% ist. Die Belegungsrepräsentation gibt dann in einer einzelnen Repräsentation (typischerweise eine Folge von binären Speicherinhalten bzw. Bits) an, welche der Nachbarzellen als belegt gelten und welche nicht. Die Selektionsliste ist typischerweise ein Array mit zwei Einträgen, nämlich den Selektionsmasken.

Hierin wird also eine verzweigungsfreie Analyse und Repräsentation der Nachbarzellen einer Zelle vorgeschlagen. Gemäß dem Stand der Technik müsste zum Aufbau einer Belegungsrepräsentation für jede Nachbarzelle die Belegung geprüft werden und dann in zwei Fälle verzweigt werden, nämlich ob die Zelle belegt ist, oder nicht. Abhängig davon würde dann die vorläufige Belegungsrepräsentation geändert.

Gemäß der vorliegenden Erfindung wird das Ergebnis des Kriteriumvergleiches als Identifikation einer Selektionsmaske verwendet. Danach wird das Binärmuster der Nachbarzelle mit der Selektionsmaske verknüpft (um das Zwischenergebnis zu erhalten). Die Selektionsmaske ermöglicht eine Bestimmung des Verknüpfungsergebnisses derart, dass das Binärmuster unverändert bestehen bleibt, oder in gewünschter Weise geändert wird. Hiermit wird vom Effekt her eine Verzweigung erreicht, weil in der Folge entweder das unveränderte Binärmuster oder das geänderte Verknüpfungsresultat (also das Zwischenergebnis) mit der vorläufigen Belegungsrepräsentation verknüpft wird. In der Ausführung wird allerdings das Binärmuster entweder mit der einen oder der anderen Selektionsmaske verknüpft. Schlussendlich wird also entweder das Binärmuster in die vorläufige Belegungsrepräsentation inkludiert oder nicht.

Typischerweise hat die vorläufige Belegungsrepräsentation, die Belegungsrepräsentation, die Binärmuster, und die Selektionsmasken jeweils dieselbe Anzahl an Speichereinheiten. Im Fall eines rechteckigen Rasters als Umfeldkarte entstehen so 8 Nachbarzellen für eine Zelle, die sich in einem 8-Bit-Wort, also einem Byte, bereits repräsentieren lassen. In der Belegungsrepräsentation wird jeder Stelle (jedem Bit in der Bitfolge) eine Nachbarzelle zugewiesen. Für eine als belegt geltende Nachbarzelle wird das zugewiesene Bit auf "0" oder "1" gesetzt, je nachdem welcher Zustand einer Belegung zugewiesen ist. Die Selektionsmasken sind dann typischerweise (8-Bit-)Worte, in denen alle Speichereinheiten auf "0" oder "1" gesetzt wurden. Als Binärmuster bieten sich Worte an, in denen jeweils nur einmal ein vorbestimmter Zustand vorkommt, also "0" oder "1". Der einmal vorkommende Zustand wird an der Stelle der Folge platziert, die auch in der Belegungsrepräsentation der Nachbarzelle zugewiesen ist. Auf diese Weise werden die Binärmuster, Selektionsmasken und Belegungsrepräsentationen aufeinander abgestimmt.

Die Verknüpfungen können die Verknüpfung der gespeicherten Zustände von jeweils zwei Speichereinheiten an derselben Stelle der jeweiligen Folge umfassen. Typischerweise und- oder oder-Verknüpfungen. Mit anderen Worten: Es findet eine bitweise Verknüpfung bzw. "Verundung"/"Verorderung" statt. Jede Stelle der Binärfolge wird mit der entsprechenden Stelle der anderen Binärfolge verknüpft. Dies durch eine und- oder oder-Verknüpfung. Diese Art von Operationen sind besonders recheneffizient auf embedded Prozessoren und allgemeinen elektronischen Recheneinheiten ausführbar.

In einer typischen Implementierung betrifft die gespeicherte Information zur Belegung die Belegungswahrscheinlichkeit des entsprechenden Umfeldabschnitts; wobei das Bestimmen, ob die Belegung der Nachbarzelle einem vorbestimmten Kriterium genügt, umfasst: Vergleichen, ob die gespeicherte Belegungswahrscheinlichkeit über, unter oder auf einem vorbestimmten Schwellwert liegt. Der Schwellwert kann beispielsweise 50% betragen. Der Vergleich wird typischerweise mithilfe der binären Subtraktion ausgeführt. In typischen Rechnertopologien und Zahlenformaten gibt die erste Stelle der Binärfolge des Subtraktionsergebnisses das Vorzeichen des Subtraktionsergebnisses an und damit, ob die Belegungswahrscheinlichkeit der Zelle größer, kleiner oder gleich dem Schwellwert ist. Die erste Stelle (bzw. das erste Bit) kann als Index für die Selektionsliste (also als Index für ein Array) verwendet werden. Allgemeiner formuliert: Es wird der erste Eintrag der Selektionsliste ausgewählt, wenn die gespeicherte Belegungswahrscheinlichkeit größer als der Schwellwert ist; und es wird der zweite Eintrag ausgewählt, wenn die gespeicherte Belegungswahrscheinlichkeit kleiner als der Schwellwert ist. Das Ergebnis des Vergleiches ist also anhand des Inhalts einer binären Speichereinheit gegeben und der Inhalt der binären Speichereinheit wird zur Auswahl des Eintrags aus der Liste verwendet.

Ein anderer Aspekt der Erfindung betrifft eine elektronische Recheneinheit mit Speicher, wobei die Recheneinheit zur Ausführung eines der vorstehenden Verfahren eingerichtet ist.

### KURZE BESCHREIBUNG DER ZEICHNUNG

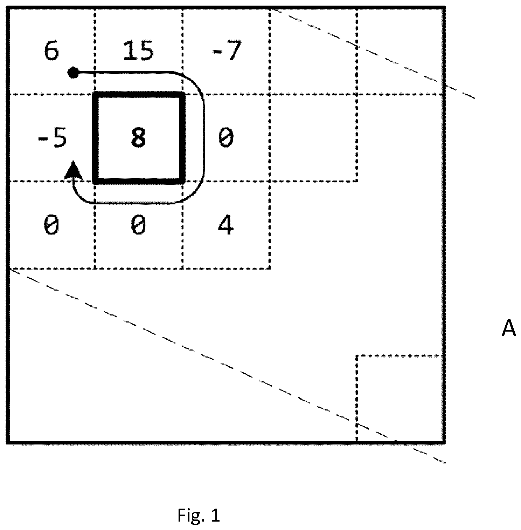

Fig. 1 zeigt symbolisch eine Umfeldkarte mit Zelle mit Nachbarzellen gemäß einem Ausführungsbeispiel.

Tabelle 1 zeigt schematisch die Rechenschritte mit einem Zahlenbeispiel gemäß einem Ausführungsbeispiel.

### DETAILLIERTE BESCHREIBUNG DES AUSFÜHRUNGSBEISPIELS

Fig. 1 zeigt symbolisch eine Umfeldkarte mit Zelle mit Nachbarzellen gemäß einem Ausführungsbeispiel. Die Umfeldkarte ist durch eine Gitterstruktur mit Zellen (gepünktelte Linien) gegliedert. Im Betrieb erfassen die Sensoren eines Fahrzeugs das Umfeld und bestimmen die Belegungswahrscheinlichkeit der Abschnitte des Umfeldes. Jedem Abschnitt des Umfeldes ist eine Zelle der Umfeldkarte zugeordnet. Die Belegungswahrscheinlichkeiten werden zur Nachbaranalyse nicht direkt verwendet, sondern die Differenz zu einem Schwellwert. Häufig, wie auch in diesem Beispiel, werden als Belegungswahrscheinlichkeiten nicht die rein mathematischen Wahrscheinlichkeiten mit Werten zwischen 0 und 1 sondern frei skalierte Maßzahlen (korrespondierend aber mit den tatsächlichen Wahrscheinlichkeiten) verwendet. In Fig. 1 sind beispielhaft für 9 Zellen die Differenzen der frei skalierten Maßzahlen aufgeführt. Werte größer 0 bedeuteten, dass die Zelle als belegt gilt. Werte kleiner 0 bedeuten, dass die Zelle als nicht belegt gilt. Der Wert 0 lässt keine Aussage über die Belegung zu (Belegung unbekannt).

Im Ausführungsbeispiel der Tabelle 1 wird für die Zelle mit dem Zeichen "O" (entspricht der fett umrandeten Zelle in Fig. 1 mit dem Wert 8), die Belegungsrepräsentation ermittelt. Die Werte, die den einzelnen Zellen zugewiesen sind, sind in Fig. 1 dargestellt. Die Angaben "NW", "N", "NE", ... bedeuten "north-west", "north", "northeast", ... und beziehen sich auf die Orientierung der Nachbarzellen zur betrachteten Zelle.

Im Beispiel der Tabelle bezeichnet "mask" die Selektionsliste mit den zwei Selektionsmasken. Mask ist ein Array, das als Einträge zwei einzelne Byte umfasst. Der erste Eintrag "mask(0)" ist eine Bitfolge von acht "1"en. Der zweite Eintrag mask(1) ist eine Bitfolge von acht "0"en. Der Begriff "kernel" bezeichnet die Binärmuster, der ein Array mit acht Einträgen ist. Jedes Binärmuster umfasst eine "1" und sieben "0", wobei die "1" in jedem Binärmuster an einer anderen Stelle der Folge steht. Damit wird einer "1" an einer Stelle des Binärmusters eine Zelle der Nachbarschaft zugeordnet. Mit "v(0 ... 7)" wird die vorläufige Belegungsrepräsentation bezeichnet, wobei sich der Index aus der betrachteten Nachbarzelle ergibt; die Nummerierung ist entsprechend dem dargestellten Pfeil im Uhrzeigersinn. "v(8)" bezeichnet die Belegungsrepräsentation. "T" bezeichnet den Schwellwert und p eine Maßzahlrepräsentation der Belegungswahrscheinlichkeit. In Fig. 1 sind somit die Ergebnisse aus "p-T" als Zahlenwerte dargestellt. Der Operator "|" stellt eine bitweise oder-Verknüpfung dar. Der Operator "&" stellt eine bitweise und-Verknüpfung dar.

Im Betrieb beginnt die Ermittlung der Belegungsrepräsentation für die Nachbarschaft mit der Bearbeitung für die Zelle "NW". Diese weist die Maßzahl p=6 auf. Die Subtraktion des Schwellwertes T=1 ergibt die positive Zahl 5. In der Zahlenrepräsentation bzw. dem verwendeten Zahlenformat (integer) werden positive Zahlen mit einem MSB (most significant bit) von "0" dargestellt, negative Zahlen mit einem MSB = "1". Folglich ergibt sich für die Zelle "NW" ein MSB-Wert von "0".

Dieser Wert wird als Index für die Selektionsliste verwendet (mask), und der erste Eintrag (mask(0)), also die Bitfolge mit acht "1" ausgelesen. Diese Selektionsmaske wird mit dem Binärmuster, das der Zelle "NW" zugeordnet ist, bitweise undverknüpft. Das Binärmuster weist eine "1" an der letzten Stelle auf (LSB, least significant bit). Dies ist die Stelle, die der Zelle zugewiesen ist. Das Ergebnis der Und-Verknüpfung stellt das Zwischenergebnis dar (in Tabelle 1) nicht explizit aufgeführt.

Im letzten Schritt der Verarbeitung der Zelle "NW" wird das Zwischenergebnis mit der bisherigen vorläufigen Belegungsrepräsentation "v(0)" verrechnet, nämlich bitweise oder-verknüpft. Es entsteht die Belegungsrepräsentation "v(1)".

Dieselben Schritte werden für alle anderen Nachbarzellen wiederholt, wie ausschnittsweise in Tabelle 1 dargestellt.

Im letzten Schritt ergibt sich durch die oder-Verknüpfung des Zwischenergebnisses für Zelle "W" mit der vorläufigen Belegungsrepräsentation ("v(7)") die Belegungsrepräsentation ("v(8)"). Aus dieser lässt sich leicht ablesen, welche Nachbarzellen als belegt gelten. Es sind jene Nachbarzellen, deren zugeordnete Stelle mit einer "1" belegt ist.

Mit dem vorgestellten Verfahren lässt sich verzweigungsfrei und damit für embedded Prozessoren recheneffizient, die Belegungsrepräsentation der Nachbarschaft einer Zelle errechnen.

Basierend auf der Belegungsrepräsentation und ggf. unter Berücksichtigung weiterer Belegungsrepräsentationen von weiteren Zellen, können Kanten von Hindernissen im Umfeld des Fahrzeugs bestimmt werden. Dabei kann das vorgestellte Verfahren für jede Zelle oder jede als belegt erkannte Zelle der Umfeldkarte ausgeführt werden.

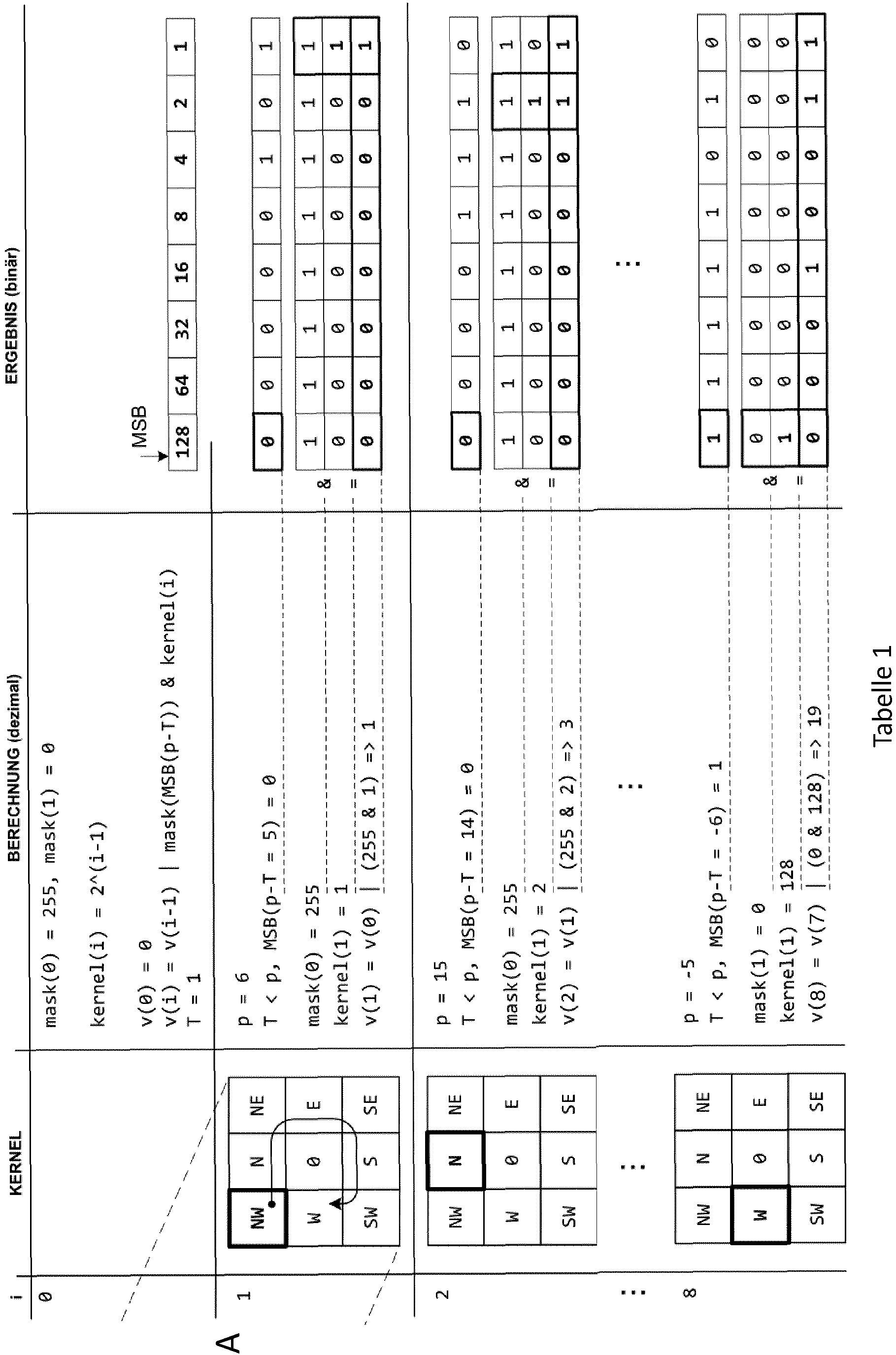

## Patentansprüche

1. Verfahren zur Errechnung einer Belegungsrepräsentation der Nachbarzellen einer Zelle einer Umfeldkarte; wobei die Umfeldkarte eine Datenstruktur ist, die als Untereinheiten Zellen umfasst; wobei die Zellen jeweils einem Abschnitt des Umfeldes eines Fahrzeugs zugeordnet sind; wobei das Fahrzeug mithilfe von Sensoren die Belegung der Abschnitte des Umfeldes durch Hindernisse erfasst und die Information zur Belegung eines Abschnitts in der entsprechenden zugeordneten Zelle speichert;
Wobei die Belegungsrepräsentation eine Folge an binären Speichereinheiten ist, Binärsequenz; wobei jeder Stelle der Binärsequenz eine Nachbarzelle zugewiesen ist;
wobei eine binäre Speichereinheit dazu ausgelegt ist zwei Zustände, aktiviert und inaktiviert, einzunehmen;
Wobei jeder Nachbarzelle eine Folge an binären Speichereinheiten, Binärmuster, zugewiesen ist; wobei die Binärmuster derart gewählt werden, dass sich je zwei Binärmuster in zumindest einem Zustand an derselben Stelle der jeweiligen Folge unterscheiden;
Wobei eine Selektionsliste bereitgestellt wird, die zwei Einträge umfasst, die Selektionsmasken, wobei jeder Eintrag eine Folge an binären Speichereinheiten umfasst; wobei die Speichereinheiten des ersten Eintrags alle den ersten Zustand aufweisen und die Speichereinheiten des zweiten Eintrags alle den zweiten Zustand aufweisen;
wobei das Verfahren umfasst:
Bereitstellen einer vorläufigen Belegungsrepräsentation, die auf einen vorgegebenen Startwert gesetzt ist;
Für jede Nachbarzelle, Ausführen der folgenden Unterverfahrensschritte:
Bestimmen, ob die Belegung der Nachbarzelle einem vorbestimmten Kriterium genügt;
Auswählen einer Selektionsmaske aus der Liste abhängig von der Erfüllung des Kriteriums;
Verknüpfen der ausgewählten Selektionsmaske und des der Nachbarzelle zugewiesenen Binärmusters, um ein Zwischenergebnis zu erhalten;
Verknüpfen des Zwischenergebnisses mit der vorläufigen Belegungsrepräsentation;
Falls alle Nachbarzellen betrachtet wurden: Bereitstellen der vorläufigen Belegungsrepräsentation als Belegungsrepräsentation.

2. Verfahren nach Anspruch 1, wobei das die vorläufige Belegungsrepräsentation, die Belegungsrepräsentation, die Binärmuster, und die Selektionsmasken jeweils dieselbe Anzahl an Speichereinheiten aufweisen.

3. Verfahren nach einem der vorhergehenden Ansprüche, wobei die Verknüpfungen die Verknüpfung der gespeicherten Zustände von jeweils zwei Speichereinheiten an derselben Stelle der jeweiligen Folge umfasst.

4. Verfahren nach Anspruch 3, wobei bei der Verknüpfung der ausgewählten Selektionsmaske und-Verknüpfungen der gespeicherten Zustände verwendet werden.

5. Verfahren nach einem der Ansprüche 3 oder 4, wobei bei der Verknüpfung des Zwischenergebnisses oder-Verknüpfungen der gespeicherten Zustände verwendet werden.

6. Verfahren nach einem der vorhergehenden Ansprüche, wobei die gespeicherte Information zur Belegung die Belegungswahrscheinlichkeit des Umfeldabschnitts betrifft; wobei das Bestimmen, ob die Belegung der Nachbarzelle einem vorbestimmten Kriterium genügt, umfasst:
Vergleichen, ob die gespeicherte Belegungswahrscheinlichkeit über, unter oder auf einem vorbestimmten Schwellwert liegt.

7. Verfahren nach Anspruch 6, wobei das Auswählen eines Eintrags aus einer Liste abhängig von der Erfüllung des Kriteriums umfasst:
Auswählen des ersten Eintrags, wenn die gespeicherte Belegungswahrscheinlichkeit größer als der Schwellwert ist;
Auswählen des zweiten Eintrags, wenn die gespeicherte Belegungswahrscheinlichkeit kleiner als der Schwellwert ist.

8. Verfahren nach einem der Ansprüche 6 oder 7, wobei das Ergebnis des Vergleiches anhand des Inhalts einer binären Speichereinheit gegeben ist.

9. Verfahren nach Anspruch 8, wobei der Inhalt der binären Speichereinheit zur Auswahl des Eintrags aus der Liste verwendet wird.

10. Elektronische Recheneinheit mit Speicher, wobei die Recheneinheit zur Ausführung eines Verfahrens nach einem der vorhergehenden Ansprüche eingerichtet ist.

## Claims

1. A method for calculating an occupancy representation of cells adjacent to a cell of an environment map, wherein the environment map is a data structure which comprises cells as sub-units, wherein the cells are each associated with a portion of the environment of a vehicle, wherein the vehicle detects the occupancy of the portions of the environment by obstacles with the aid of sensors and stores the information regarding the occupancy of a portion in the corresponding associated cell,
wherein the occupancy representation is a sequence of binary storage units, wherein each position of the binary sequence is assigned an adjacent cell,
wherein a binary storage unit is designed to assume two states:
activated and inactivated,
wherein each adjacent cell is assigned a sequence of binary storage units, that is to say binary patterns, wherein the binary patterns are selected in such a way that each two binary patterns differ in at least one state at the same point of the particular sequence,
wherein a selection list is provided which comprises two entries or selection masks, wherein each entry comprises a sequence of binary storage units, wherein the storage units of the first entry all have the first state and the storage units of the second entry all have the second state,
wherein the method comprises:
providing a preliminary occupancy representation which is based on a predefined starting value;
for each adjacent cell, performing the following method substeps:
determining whether the occupancy of the adjacent cell satisfies a predetermined criterion;
selecting a selection mask from the list depending on the satisfaction of the criterion;
linking the selected selection mask and the binary pattern assigned to the adjacent cell in orderto obtain an intermediate result;
linking the intermediate result with the preliminary occupancy representation;
if all adjacent cells have been considered: providing the preliminary occupancy representation as occupancy representation.

2. A method according to claim 1, wherein the preliminary occupancy representation, the occupancy representation, the binary patterns, and the selection masks each have the same number of storage units.

3. A method according to either one of the preceding claims, wherein the linking comprises the linking of the stored states of in each case two storage units at the same point of the particular sequence.

4. A method according to claim 3, wherein AND operators of the stored states are used in the linking of the selected selection mask.

5. A method according to either one of claims 3 or 4, wherein OR operators of the stored states are used in the linking of the intermediate result.

6. A method according to any one of the preceding claims, wherein the stored information regarding occupancy relates to the occupancy probability of the environment portion, wherein the determination of whetherthe occupancy of the adjacent cell satisfies a predetermined criterion comprises:
comparing whether the stored occupancy probability lies below or at a predetermined threshold value.

7. A method according to claim 6, wherein the selection of an entry from a list depending on the satisfaction of the criterion comprises:
selecting the first entry when the stored occupancy probability is greater than the threshold value;
selecting the second entry when the stored occupancy probability is lower than the threshold value.

8. A method according to either one of claims 6 or 7, wherein the result of the comparison is given on the basis of the content of a binary storage unit.

9. A method according to claim 8, wherein the content of the binary storage unit is used for selection of the entry from the list.

10. An electronic computing unit with memory, wherein the computing unit is designed to carry out a method according to any one of the preceding claims.

## Revendications

1. Procédé de calcul d'une représentation d'occupation des cellules voisines d'une cellule d'une carte d'environnement, selon lequel la carte d'environnement est une structure de données qui comporte des cellules en tant que sous unités, les cellules étant respectivement associées à un segment de l'environnement d'un véhicule, le véhicule détectant à l'aide de capteurs l'occupation des segments de l'environnement par des obstacles, et l'information d'occupation d'un segment étant enregistrée dans la cellule associée respective,
procédé selon lequel,
la représentation d'occupation est une suite d'unités de mémoire binaire, une séquence binaire, à chaque emplacement de la séquence binaire étant attribuée une cellule voisine,
une unité de mémoire binaire est réalisée pour prendre deux états :
activé et non activé,
à chaque cellule voisine est attribuée une suite d'unités de mémoire binaires, un modèle binaire, le modèle binaire étant sélectionné de sorte que deux modèles binaires respectifs se distinguent par au moins un état au même emplacement de la suite respective,
une ligne de sélection est fournie, cette liste de sélection comprenant deux entrées, les fenêtres de sélection, chaque entrée comprenant une suite d'unités de mémoire binaires, les unités de mémoire de la première entrée étant toutes dans le premier état et les unités de mémoire de la seconde entrée étant toute dans le second état,
ce procédé comprenant des étapes consistant à :
préparer une représentation d'occupation provisoire qui est établie sur une valeur de départ prédéfinie,
pour chaque cellule voisine, effectuer les sous étapes suivantes du procédé consistant à :
déterminer si l'occupation de la cellule voisine satisfait à un critère prédéfini,
sélectionner une fenêtre de sélection dans la liste en fonction de la satisfaction au critère,
combiner les fenêtres de sélection sélectionnées et le modèle binaire attribué à la cellule voisine pour obtenir un résultat intermédiaire,
combiner le résultat intermédiaire avec la représentation d'occupation provisoire,
si toutes les cellules voisines ont été prises en considération fournir la représentation d'occupation provisoire en tant que représentation d'occupation.

2. Procédé conforme à la revendication 1,
selon lequel, la représentation d'occupation provisoire, la représentation d'occupation, le modèle binaire et les fenêtres de sélection ont respectivement le même nombre d'unités de mémoire.

3. Procédé conforme à l'une des revendications précédentes,
selon lequel, les combinaisons comportent la combinaison des états enregistrés de deux unités de mémoire respectives au même emplacement de la suite respective.

4. Procédé conforme à la revendication 3,
selon lequel,
lors de la combinaison les fenêtres de sélection sélectionnées et les combinaisons des états enregistrées sont utilisées.

5. Procédé conforme à l'une des revendications 3 et 4,
selon lequel,
lors de la combinaison ou des combinaisons, du résultat intermédiaire, les états enregistrés sont utilisés.

6. Procédé conforme à l'une des revendications précédentes,
selon lequel,
l'information d'occupation enregistrée concerne la probabilité d'occupation du segment d'environnement, la détermination comprenant le fait que l'occupation de la cellule voisine satisfait ou non à un critère prédéfini,
on compare si la probabilité d'occupation enregistrée est située au-dessus, au-dessous ou au niveau d'une valeur de seuil prédéfinie.

7. Procédé conforme à la revendication 6,
selon lequel,
la sélection d'une entrée dans une liste est fonction de la satisfaction au critère :
on sélectionne la première entrée lorsque la probabilité d'occupation enregistrée est supérieure à la valeur de seuil,
on sélectionne la seconde entrée, lorsque la probabilité d'occupation enregistrée est inférieure à la valeur de seuil.

8. Procédé conforme à l'une des revendications 6 et 7,
selon lequel le résultat de la comparaison est obtenu sur fondement du contenu d'une unité de mémoire binaire.

9. Procédé conforme à la revendication 8,
selon lequel le contenu de l'unité de mémoire binaire est utilisé pour la sélection de l'entrée dans la liste.

10. Unité de calcul électronique comprenant une mémoire, cette unité de calcul étant réalisée pour permettre la mise en oeuvre du procédé conforme à l'une des revendications précédentes.
